# EUROPEAN PATENT APPLICATION

(11) **EP 2 706 773 A1**
(43) Date of publication of application: **12.03.2014**
(21) Application number: 13157776.9
(22) Date of filing: 05.03.2013
(51) Int. Cl.: H04W 16/16, H04W 52/44

(54) **Mobile wireless device and wireless communication method**

(30) Priority: 07.09.2012 JP 2012197703
(71) Applicant: Kabushiki Kaisha Toshiba, Tokyo (JP)
(72) Inventor: Akita, Koji, Tokyo (JP); Satsukawa, Mitsuaki, Tokyo (JP); Ito, Takayoshi, Tokyo (JP)
(74) Representative: HOFFMANN EITLE

(57) **Abstract**

A mobile wireless device has a power receiver configured to wirelessly receive power, a first communication unit configured to sequentially perform information transmission, waiting operation, information reception, and internal processing for a certification process, by using the received power, a second communication unit configured to perform wireless communication for data communication during the certification process, by using the received power, and a communication controller configured to control performing the data communication by the second communication unit within a period after the first communication unit starts information transmission for the certification process until the first communication unit completes information reception for the certification process.

## Description

### CROSS REFERENCE TO RELATED APPLICATIONS

This application is based upon and claims the benefit of priority from the prior Japanese Patent Application No. 2012-197703, filed on September 7, 2012, the entire contents of which are incorporated herein by reference.

### FIELD

Embodiments of the present invention relate to a mobile wireless device and a wireless communication method.

### BACKGROUND

There is known a technique of performing a certification process by a mobile wireless device compatible with Felica (registered trademark) etc. through proximity wireless communication. Here, the certification process means a process for confirming that a certain device is a specific device, for example. The certification process performed by the mobile wireless device using proximity wireless communication is used to permit a person to pass through an entrance gate only when a user holds a legitimate mobile wireless device, or to make payment by electronic money.

Such a certification process requires, e.g., hundreds of milliseconds to several seconds of time, since the communication has to be performed multiple times between a mobile wireless device and a communication partner device a plurality of times.

It is desirable that the time required for the certification process is as short as possible. This is because usability of users is deteriorated by the increase in time taken for the certification process, which leads to the increase in time taken for passing through an entrance gate or making payment.

The speed of the certification process can be increased by improving the processing capacity of hardware (e.g., processor, communication unit, etc.) incorporated into the mobile wireless device. However, the improvement of the processing capacity of hardware leads to the increase in power consumption. Recently, a batteryless mobile wireless device having hardware driven by wirelessly received power has been spreading. However, it is difficult to implement powerful hardware on such a mobile wireless device since the power available to drive the hardware is limited.

### BRIEF DESCRIPTION OF THE DRAWINGS

Fig. 1 is a block diagram showing a schematic structure of a mobile wireless device 1 according to a first embodiment.
Fig. 2 is a block diagram showing a schematic structure of a communication partner device 11.
Fig. 3 is a timing diagram of the certification process performed between the mobile wireless device 1 and the communication partner device 11 in the first embodiment.
Fig. 4 is a sequence diagram of proximity wireless communication performed between the mobile wireless device 1 and the communication partner device 11 in the first embodiment.
Fig. 5 is a sequence diagram according to a modification example derived from Fig. 4.
Fig. 6 is a timing diagram of the certification process performed between the mobile wireless device 1 and the communication partner device 11 in a second embodiment.
Fig. 7 is a sequence diagram of proximity wireless communication performed between the mobile wireless device 1 and the communication partner device 11 in the second embodiment.
Fig. 8 is a sequence diagram according to a modification example derived from Fig. 7.
Fig. 9 is a timing diagram of the certification process performed between the mobile wireless device 1 and the communication partner device 11 in a third embodiment.
Fig. 10 is a sequence diagram of proximity wireless communication performed between the mobile wireless device 1 and the communication partner device 11 in the third embodiment.
Fig. 11 is a sequence diagram according to a modification example derived from Fig. 10.
Fig. 12 is a timing diagram according to a modification example derived from Fig. 9.
Fig. 13 is a timing diagram according to another modification example derived from Fig. 9.
Fig. 14 is a timing diagram of the certification process performed between the mobile wireless device 1 and the communication partner device 11 in a fourth embodiment.
Fig. 15 is a sequence diagram of proximity wireless communication performed between the mobile wireless device 1 and the communication partner device 11 in the fourth embodiment.
Fig. 16 is a sequence diagram according to a modification example derived from Fig. 15.
Fig. 17 is a block diagram showing a schematic structure of the mobile wireless device 1 according to a fifth embodiment.
Fig. 18 is a block diagram showing a schematic structure of the communication partner device 11 corresponding to Fig. 17.
Fig. 19 is a block diagram showing a schematic structure of the mobile wireless device 1 according to a sixth embodiment.
Fig. 20 is a block diagram according to a modification example derived from Fig. 19.

### DETAILED DESCRIPTION

According to one embodiment, a mobile wireless device has a power receiver configured to wirelessly receive power, a first communication unit configured to sequentially perform information transmission, waiting operation, information reception, and internal processing for a certification process, by using the received power, a second communication unit configured to perform wireless communication for data communication during the certification process, by using the received power, and a communication controller configured to control performing the data communication by the second communication unit within a period after the first communication unit starts information transmission for the certification process until the first communication unit completes information reception for the certification process.

Embodiments will now be explained with reference to the accompanying drawings.

### (First Embodiment)

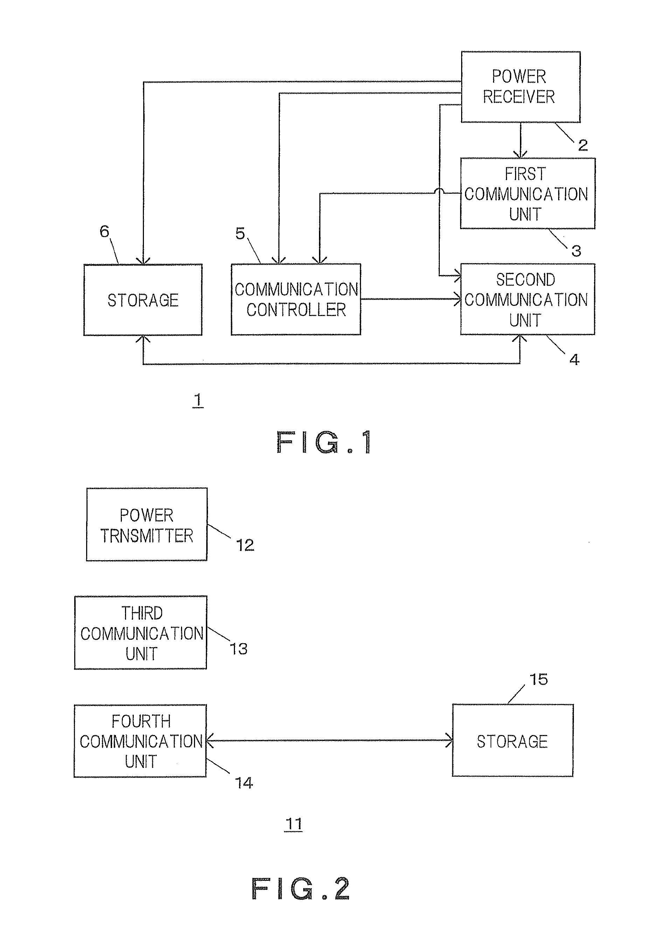

Fig. 1 is a block diagram showing a schematic structure of a mobile wireless device 1 according to a first embodiment. The mobile wireless device 1 of Fig. 1 has a power receiver 2; a first communication unit 3, a second communication unit 4, a communication controller 5, and a storage 6.

The power receiver 2 wirelessly receives power. The first communication unit 3 sequentially performs information transmission, waiting operation, information reception, and internal processing for a certification process, by using the received power. The second communication unit 4 performs wireless communication for data communication during the certification process, by using the received power.

The communication controller 5 performs control to perform the data communication by the second communication unit 4 within a period after the first communication unit 3 starts information transmission for the certification process until the first communication unit 3 completes information reception for the certification process.

More concretely, the communication controller 5 performs control to perform the data communication by the second communication unit 4 during a period after the first communication unit 3 completes information transmission for the certification process until the first communication unit 3 starts information reception for the certification process. Since this period is used for waiting operation in the certification process, the mobile wireless device 1 has a light processing load during this period.

The certification process explained in this specification includes not only a certification without a network communication, but also an authentication with the network communication.

The mobile wireless device 1 of Fig. 1 performs, e.g., proximity wireless communication with a communication partner device. Fig. 2 is a block diagram showing a schematic structure of a communication partner device 11. The communication partner device 11 shown in Fig. 2 has a power transmitter 12, a third communication unit 13, a fourth communication unit 14, and a storage 15.

The power transmitter 12 transmits power to the mobile wireless device 1. The power transmitted from the power transmitter 12 is received by the power receiver 2 in the mobile wireless device 1.

The third communication unit 13 performs wireless communication for the certification process with the first communication unit 3 in the mobile wireless device 1. The fourth communication unit 14 performs wireless communication for the data communication with the second communication unit 4 in the mobile wireless device 1.

In the certification process performed between the first communication unit 3 and the third communication unit 13, any one of the communication units transmits information for the certification process to the other communication unit and receives information for the certification process transmitted from the other communication unit. This sequence is repeated a predetermined number of times.

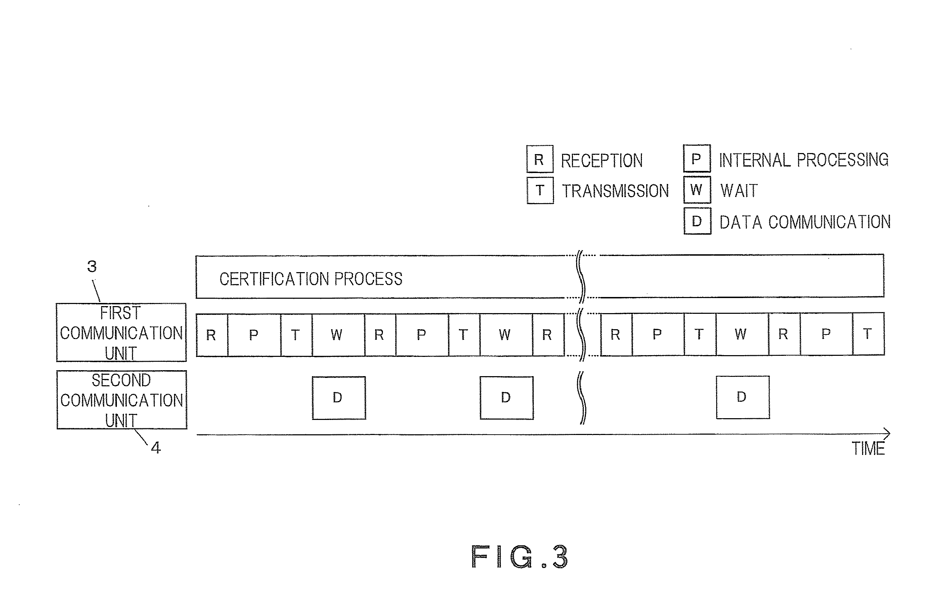

Fig. 3 is a timing diagram of the certification process performed between the mobile wireless device 1 and the communication partner device 11 in the first embodiment. As shown in Fig. 3, the first communication unit 3 in the mobile wireless device 1 and the third communication unit 13 in the communication partner device 11 repeatedly perform receiving operation R, internal processing P, transmitting operation T, and waiting operation W for information necessary for the certification process.

Among the receiving operation R, internal processing P, transmitting operation T, and waiting operation W, the internal processing P consumes the largest amount of power, and the waiting operation W consumes the smallest amount of power. Thus, in Fig. 3, the second communication unit 4 in the mobile wireless device 1 and the fourth communication unit 14 in the communication partner device 11 perform the data communication D during the period of the waiting operation W.

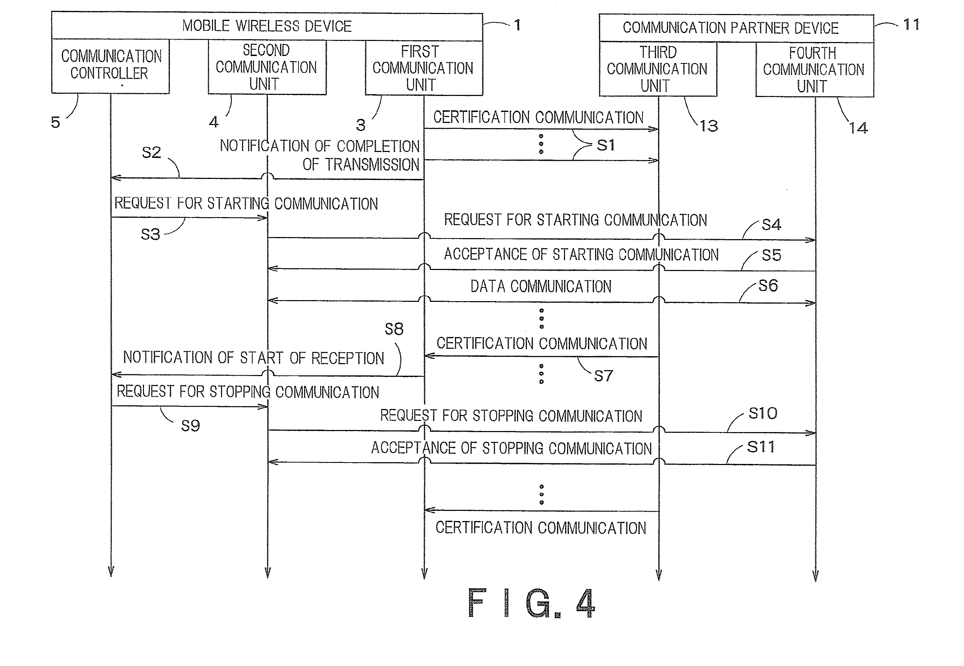

Fig. 4 is a sequence diagram of proximity wireless communication performed between the mobile wireless device 1 and the communication partner device 11 in the first embodiment.

The first communication unit 3 in the mobile wireless device 1 transmits information used in the certification process to the third communication unit 13 in the communication partner device 11 (certification communication at Step S1). When this transmitting operation is completed, the first communication unit 3 in the mobile wireless device 1 notifies the communication controller 5 that the transmission has been completed (Step S2). Responding to this notification, the communication controller 5 transmits a request for starting communication to the second communication unit 4 in the mobile wireless device 1 (Step S3).

Responding to this request, the second communication unit 4 in the mobile wireless device 1 transmits a request for starting communication to the fourth communication unit 14 in the communication partner device 11 (Step S4). The fourth communication unit 14 in the communication partner device 11 receives this request for starting communication and transmits an acceptance of starting communication to the second communication unit 4 in the mobile wireless device 1 (Step S5).

Next, the second communication unit 4 in the mobile wireless device 1 and the fourth communication unit 14 in the communication partner device 11 perform data communication therebetween (Step S6).

After that, when the third communication unit 13 in the communication partner device 11 transmits information used in the certification process to the first communication unit 3 in the mobile wireless device 1 and the first communication unit 3 receives this information (Step S7), the first communication unit 3 notifies the communication controller 5 about the start of the reception of the information used in the certification process (notification of start of reception at Step S8).

Responding to the notification of the start of the reception, the communication controller 5 transmits a request for stopping the data communication to the second communication unit 4 in the mobile wireless device 1 (request for stopping communication at Step S9). The second communication unit 4 receives the request for stopping the communication and transmits it to the fourth communication unit 14 in the communication partner device 11 (request for stopping communication at Step S10). Responding to the request for stopping the communication, the fourth communication unit 14 in the communication partner device 11 transmits an acceptance of stopping the communication to the second communication unit 4 in the mobile wireless device 1 (Step S11). Then, the data communication performed between the second communication unit 4 in the mobile wireless device 1 and the fourth communication unit 14 in the communication partner device 11 is stopped. After that, only the certification process is performed.

In this way, in Fig. 4, the data communication is performed between the second communication unit 4 in the mobile wireless device 1 and the fourth communication unit 14 in the communication partner device 11 during the waiting operation period after the mobile wireless device 1 completes information transmission necessary for the certification process to the communication partner device 11 until the mobile wireless device 1 starts information reception necessary for the certification process transmitted from the communication partner device 11. Since the mobile wireless device 1 does not perform a heavy processing load during this waiting operation period, the data communication and the certification process can be performed in parallel, which can increase the speed of the data communication.

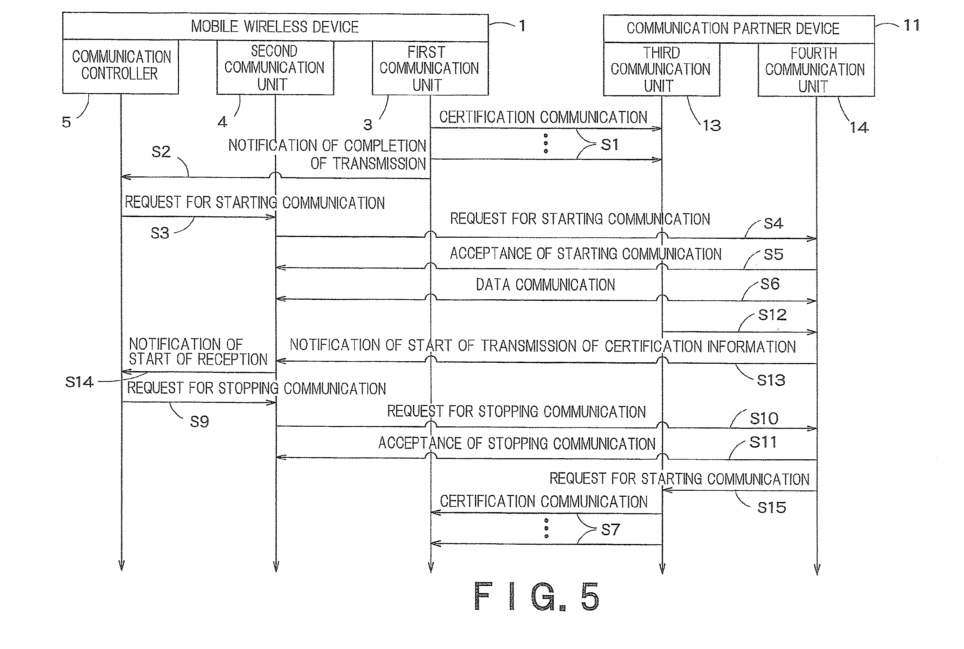

Fig. 5 is a sequence diagram according to a modification example derived from Fig. 4. In Fig. 4, the third communication unit 13 in the communication partner device 11 starts information transmission necessary for the certification process, without any prior notification (Step S7). On the other hand, in Fig. 5, the third communication unit 13 notifies the fourth communication unit 14 that the third communication unit 13 will start information transmission necessary for the certification process, before actually transmitting the information (Step S12). Responding to this notification, the fourth communication unit 14 notifies the second communication unit 4 in the mobile wireless device 1 that the information necessary for the certification process will be started to be transmitted (step S13). This notification is a notification of start of transmission of certification information.

The second communication unit 4 receives this notification and notifies the communication controller 5 to start receiving the information necessary for the certification (notification of start of reception at Step S14). After that, Steps S9 to S11 of Fig. 4 are similarly performed.

The fourth communication unit 14 in the communication partner device 11 transmits an acceptance of stopping the communication to the second communication unit 4 in the mobile wireless device 1 (Step S11), and then requests the third communication unit 13 to transmit the information necessary for the certification (step S15). This request is a request for starting communication. Responding to this request, the third communication unit 13 transmits the information necessary for the certification to the first communication unit 3 (Step S7).

As stated above, the mobile wireless device 1 according to the first embodiment performs data communication with the communication partner device 11 during the waiting operation period after the mobile wireless device 1 completes information transmission necessary for the certification until the mobile wireless device 1 starts information reception necessary for the certification, which makes it possible to perform the certification process and the data communication substantially in parallel. Accordingly, the data communication can be started quickly, eliminating a problem that the data communication cannot be started until the certification process is completed. Further, since the mobile wireless device 1 has a small processing load during the waiting operation period, the data communication performed during this period does not cause the increase in power consumption due to the rapid increase in the processing load of the mobile wireless device 1.

### (Second Embodiment)

A second embodiment to be explained below is characterized in performing the data communication also during the period for information transmission necessary for the certification.

The mobile wireless device 1 and communication partner device 11 according to the second embodiment are configured similarly to Fig. 1 and Fig. 2, respectively, and thus the explanation thereof will be omitted.

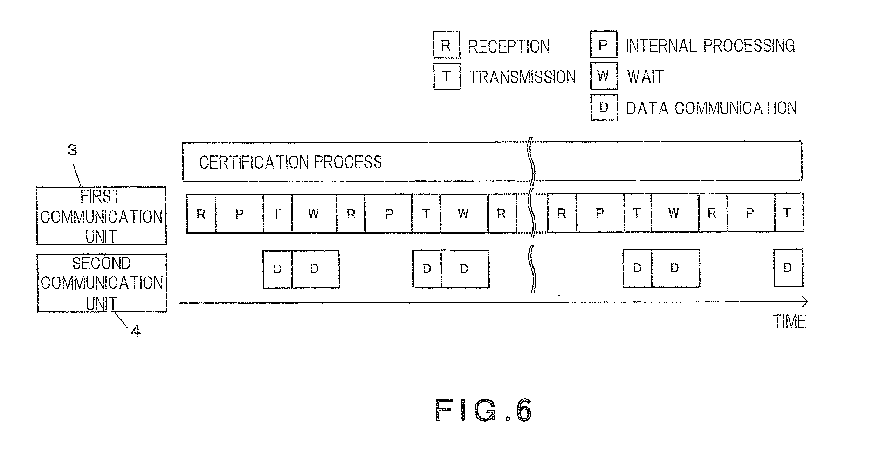

Fig. 6 is a timing diagram of the certification process performed between the mobile wireless device 1 and the communication partner device 11 in the second embodiment.

The second communication unit 4 in the mobile wireless device 1 performs the data communication D with the fourth communication unit 14 in the communication partner device 11 during a period after the first communication unit 3 starts information transmission necessary for the certification until the first communication unit 3 starts information reception necessary for the certification, that is, during a period including the transmission period T for information transmission necessary for the certification, and the waiting operation period W.

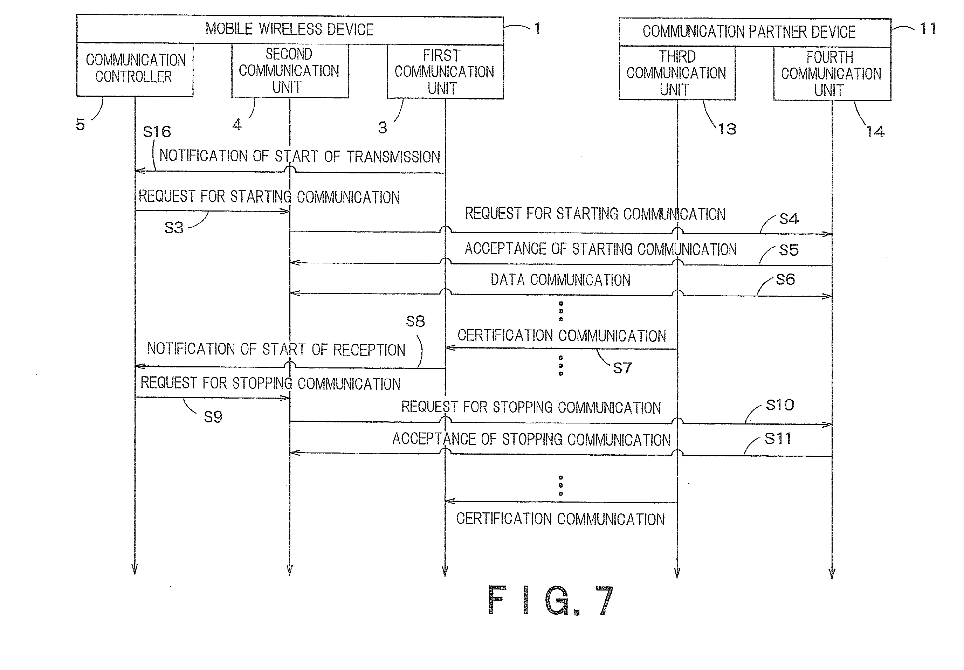

Fig. 7 is a sequence diagram of proximity wireless communication performed between the mobile wireless device 1 and the communication partner device 11 in the second embodiment. Hereinafter, steps different from Fig. 4 will be mainly explained.

The first communication unit 3 in the mobile wireless device 1 notifies the communication controller 5 that information necessary for the certification will be started to be transmitted (step S16). This notification is a notification of start of transmission. Responding to this notification, the communication controller 5 requests the second communication unit 4 to start data communication (step S3). This request is a request for starting communication. After that, Steps S3 to S11 of Fig. 4 are similarly performed.

In this way, the data communication can be performed during the transmission period for information transmission necessary for the certification and during the waiting operation period.

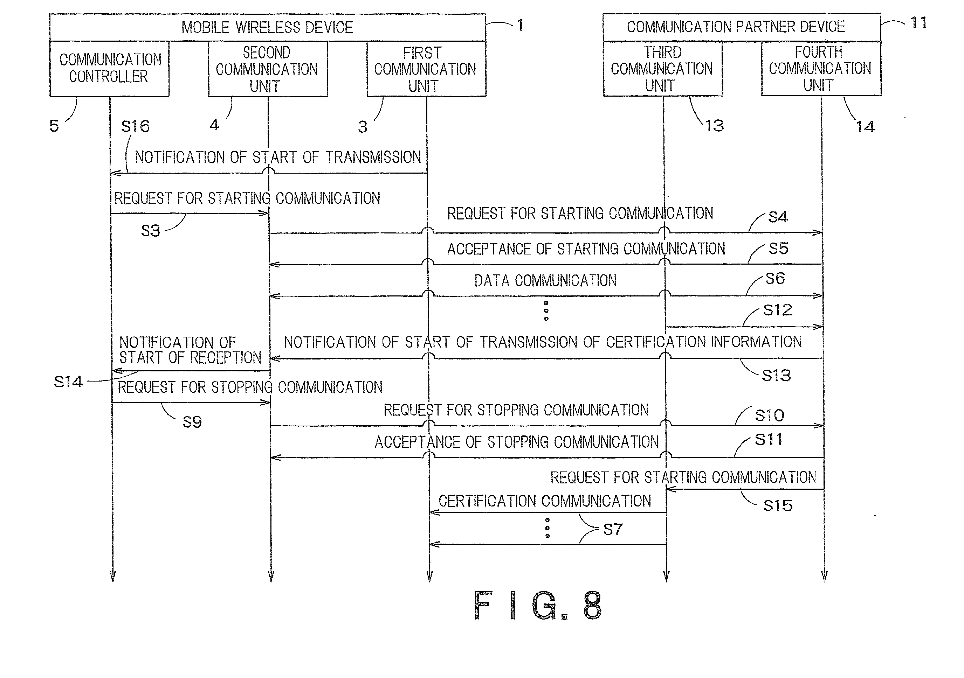

Fig. 8 is a sequence diagram according to a modification example derived from Fig. 7. In Fig. 8, similarly to Fig. 5, the communication partner device 11 notifies that the communication partner device 11 will start information transmission necessary for the certification process, before actually transmitting the information (Steps S12 to S14).

In this way, in the second embodiment, the data communication is performed during the transmission period for information transmission necessary for the certification and during the waiting operation period, by which the data communication is performed for a longer period and correspondingly more data can be transmitted and received in the certification process, compared to the first embodiment.

### (Third Embodiment)

A third embodiment to be explained below is characterized in performing the data communication also during the period for information reception necessary for the certification.

The mobile wireless device 1 and communication partner device 11 according to the third embodiment are configured similarly to Fig. 1 and Fig. 2, respectively, and thus the explanation thereof will be omitted.

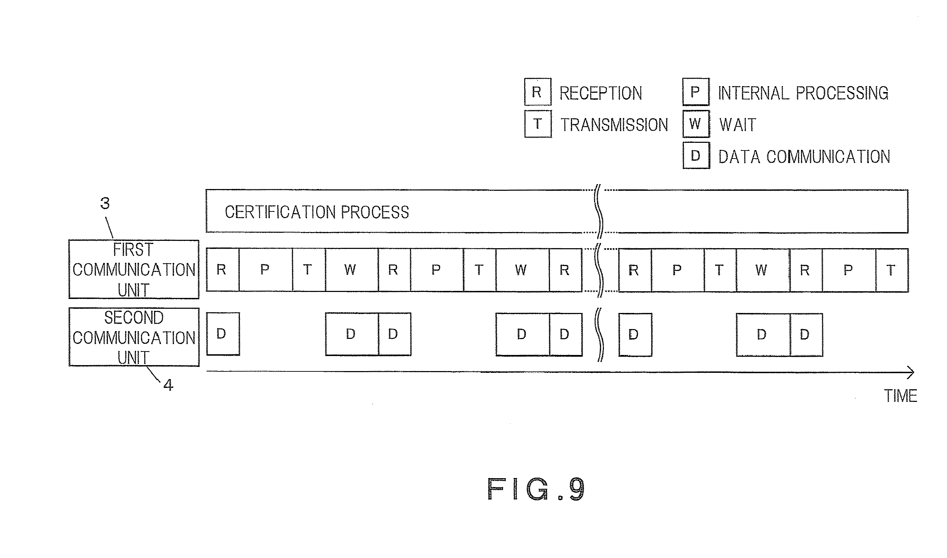

Fig. 9 is a timing diagram of the certification process performed between the mobile wireless device 1 and the communication partner device 11 in the third embodiment.

The second communication unit 4 in the mobile wireless device 1 performs the data communication with the fourth communication unit 14 in the communication partner device 11 during a period after the first communication unit 3 completes information transmission necessary for the certification until the first communication unit 3 completes information reception necessary for the certification, that is, during a period including the waiting operation period W and the reception period R for information reception necessary for the certification.

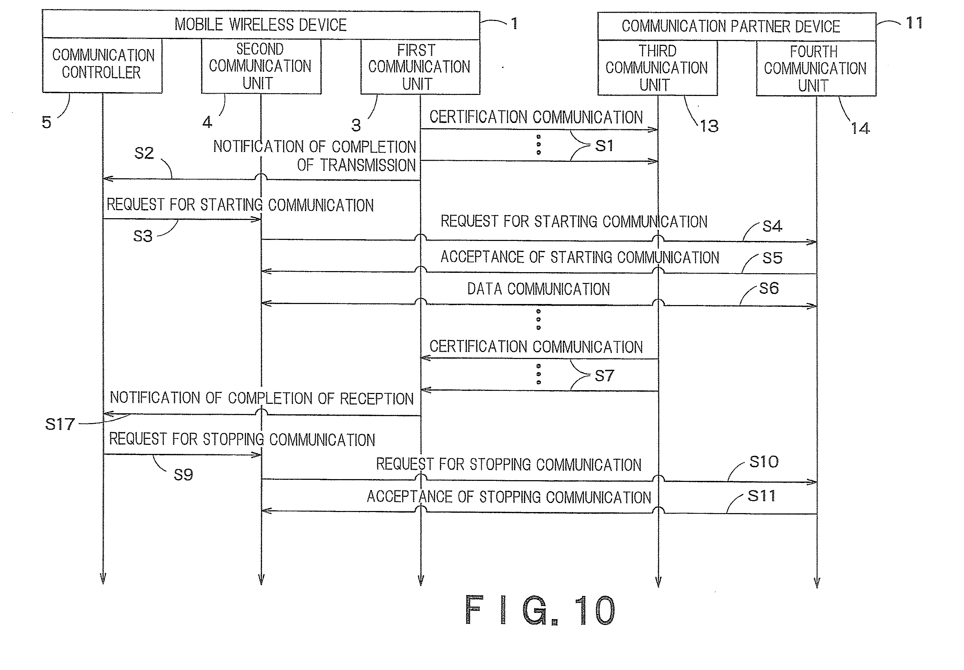

Fig. 10 is a sequence diagram of proximity wireless communication performed between the mobile wireless device 1 and the communication partner device 11 in the third embodiment. Hereinafter, steps different from Fig. 4 will be mainly explained.

Steps to be performed after information necessary for the certification is completely transmitted until the data communication is started are similar to Steps S1 to S7 of Fig. 4.

When the first communication unit 3 in the mobile wireless device 1 has completely received information necessary for the certification, the first communication unit 3 notifies the communication controller 5 that the reception has been completed (Step S17). After that, Steps S9 to S11 of Fig. 4 are similarly performed.

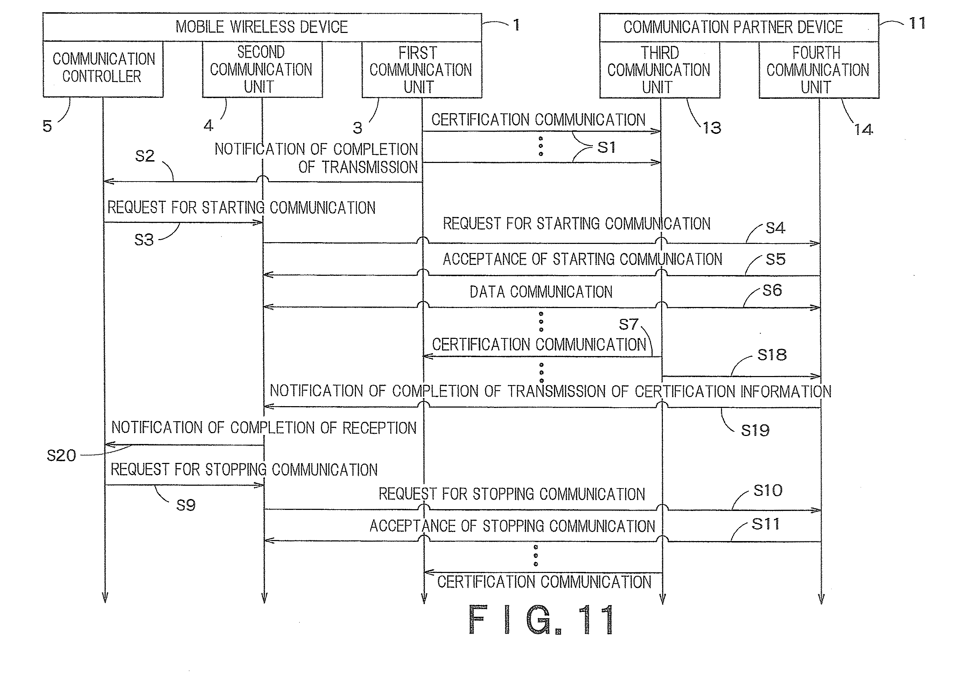

Fig. 11 is a sequence diagram according to a modification example derived from Fig. 10. The third communication unit 13 in the communication partner device 11 notifies the fourth communication unit 14 that the third communication unit 13 will complete information transmission necessary for the certification, before actually completing the transmission (Step S18). Responding to this notification, the fourth communication unit 14 notifies the second communication unit 4 in the mobile wireless device 1 that the information necessary for the certification has been completely transmitted (step S19). This notification is a notification of completion of transmission of certification information. Responding to this notification, the second communication unit 4 notifies the communication controller 5 that the information necessary for the certification has been completely received (Step S20). After that, Steps S9 to S11 of Fig. 4 are similarly performed.

In Fig. 9, the data communication is performed immediately after the certification process is started and immediately before the certification process is completed as long as the reception period for information reception necessary for the certification or the waiting operation period is effective at these points. However, the operation of the mobile wireless device 1 is not stabilized immediately after the certification process is started and immediately before the certification process is completed, and thus there is no guarantee that the data communication can be normally performed at these points.

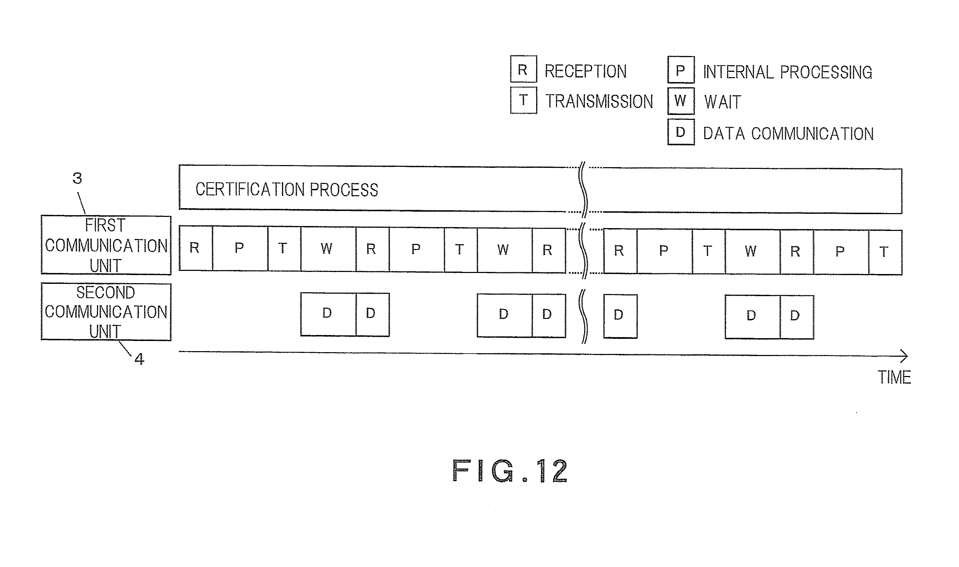

Accordingly, as shown in Fig. 12, the data communication may be omitted at least immediately after the certification process is started, even when the reception period R for information reception necessary for the certification is effective at that point.

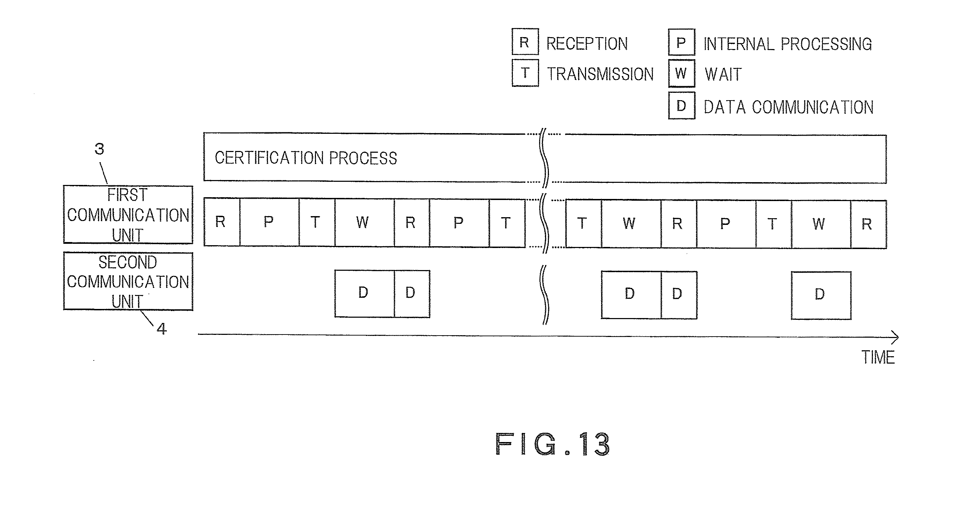

Instead, as shown in Fig. 13, the data communication may be omitted at least immediately before the certification process is completed, even when the reception period R for information reception necessary for the certification is effective at that point.

In this way, in the third embodiment, the data communication is performed during the reception period for information reception necessary for the certification and during the waiting operation period, by which the data communication is performed for a longer period and correspondingly more data can be transmitted and received in the certification process, compared to the first embodiment.

### (Fourth Embodiment)

A fourth embodiment to be explained below is characterized in combining the first to third embodiments together.

The mobile wireless device 1 and communication partner device 11 according to the fourth embodiment are similar to Fig. 1 and Fig. 2 respectively in their internal structure, and thus the explanation thereof will be omitted.

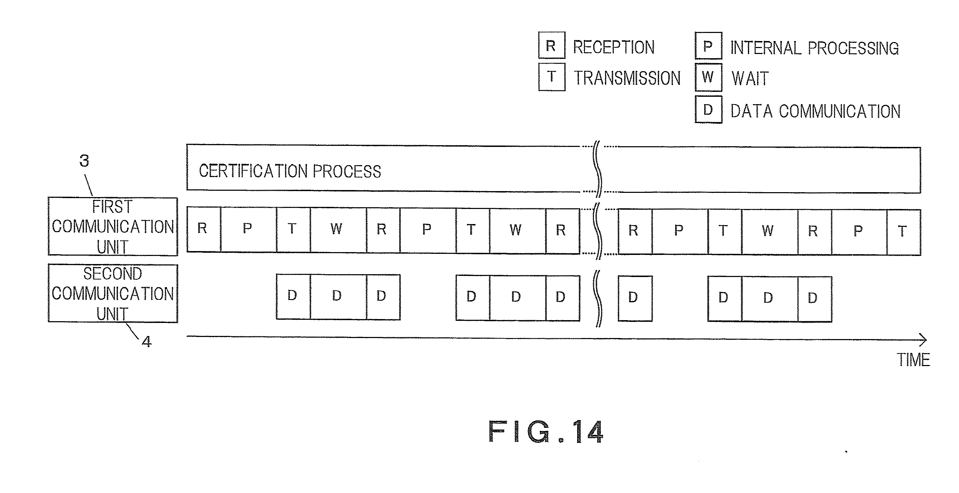

Fig. 14 is a timing diagram of the certification process performed between the mobile wireless device 1 and the communication partner device 11 in the fourth embodiment.

The second communication unit 4 in the mobile wireless device 1 performs the data communication with the fourth communication unit 14 in the communication partner device 11 during a period after the first communication unit 3 starts information transmission necessary for the certification until the first communication unit 3 completes information reception necessary for the certification, that is, during a period including the transmission period T for information transmission necessary for the certification, the waiting operation period W, and the reception period R for information reception necessary for the certification.

Accordingly, the mobile wireless device 1 performs the data communication with the communication partner device 11 except during the internal processing period P in the certification process, which means that the mobile wireless device 1 performs the data communication with the communication partner device 11 for most of the time in the certification process. Accordingly, the data communication between the mobile wireless device 1 and the communication partner device 11 can be performed swiftly.

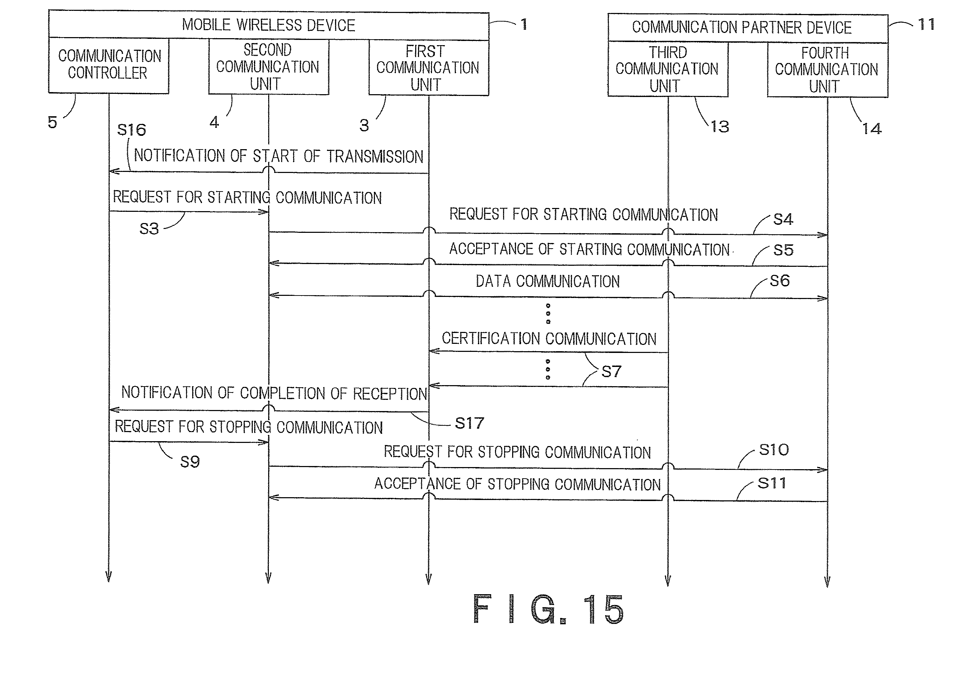

Fig. 15 is a sequence diagram of proximity wireless communication performed between the mobile wireless device 1 and the communication partner device 11 in the fourth embodiment. Hereinafter, steps different from Fig. 4 will be mainly explained.

First, similarly to Step S16 of Fig. 7, the first communication unit 3 in the mobile wireless device 1 notifies the communication controller 5 that information necessary for the certification will be started to be transmitted (step S16). This notification is a notification of start of transmission. Then, Steps S3 to S7 of Fig. 7 are similarly performed. After that, similarly to Step S17 of Fig. 10, when the first communication unit 3 in the mobile wireless device 1 has completely received the information necessary for the certification, the first communication unit 3 notifies the communication controller 5 that the reception has been completed (Step S17). After that, Steps S9 to S11 of Fig. 4 are similarly performed.

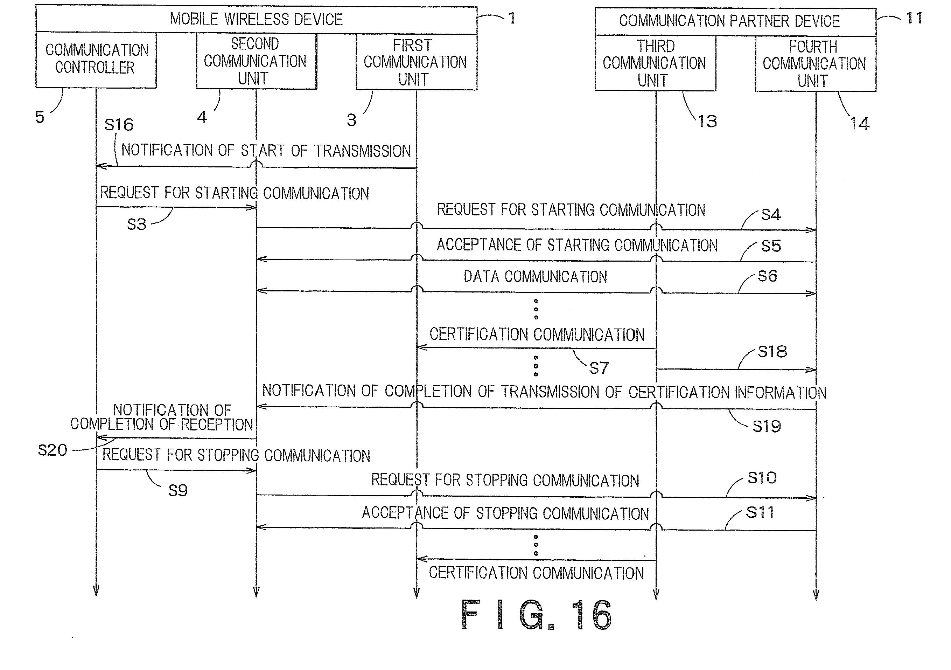

Fig. 16 is a sequence diagram according to a modification example derived from Fig. 15. Similarly to Fig. 11, the third communication unit 13 in the communication partner device 11 notifies the fourth communication unit 14 that the third communication unit 13 will complete information transmission necessary for the certification, before actually completing the transmission (Step S18). Responding to this notification, the fourth communication unit 14 notifies the second communication unit 4 in the mobile wireless device 1 that the information necessary for the certification has been completely transmitted (step S19). This notification is a notification of completion of transmission of certification information. Responding to this notification, the second communication unit 4 notifies the communication controller 5 that the information necessary for the certification has been completely received (Step S20). After that, Steps S9 to S11 of Fig. 4 are similarly performed.

As stated above, the mobile wireless device 1 performs the data communication with the communication partner device 11 in parallel with the certification process during the transmission period for information transmission necessary for the certification, during the waiting operation period, and during the reception period for information reception necessary for the certification. Since the data communication can be performed in parallel with the certification process for most of the time in the certification process, time required for the data communication can be shortened by starting the data communication quickly.

### (Fifth Embodiment)

A fifth embodiment to be explained below relates to a modification example of the internal structure of the mobile wireless device 1 and communication partner device 11 according to the first to fourth embodiments.

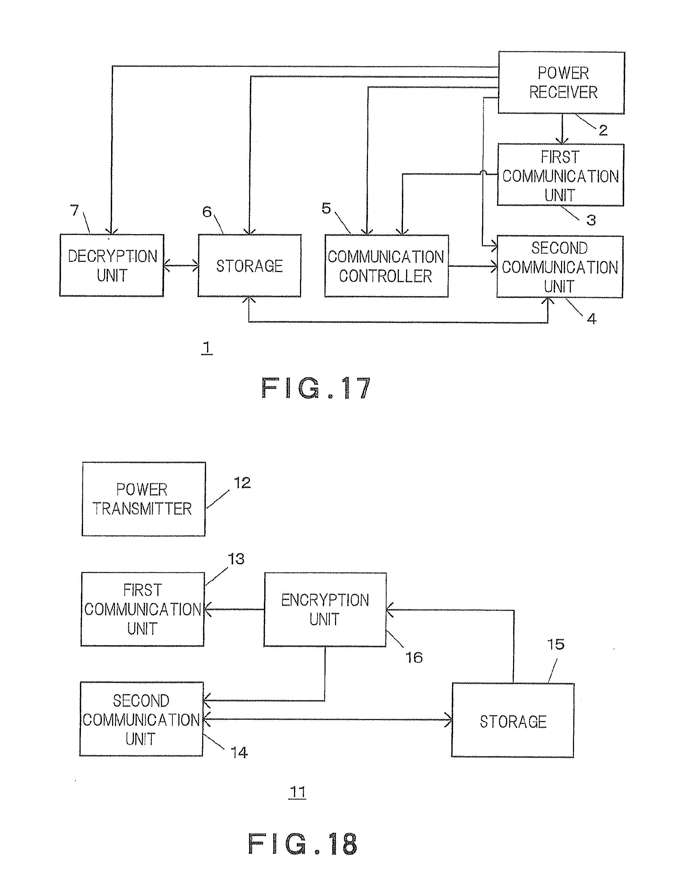

Fig. 17 is a block diagram showing a schematic structure of the mobile wireless device 1 according to the fifth embodiment. The mobile wireless device 1 of Fig. 17 further has a decryption unit 7 in addition to the components shown in Fig. 1. This decryption unit 7 decrypts encrypted information transmitted from the communication partner device 11 and received by the mobile wireless device 1.

The decryption unit 7 may decrypt encrypted information after the certification process between the mobile wireless device 1 and the communication partner device 11 has been normally completed, by using a key exchanged between the devices.

Fig. 18 is a block diagram showing a schematic structure of the communication partner device 11 corresponding to Fig. 17. The communication partner device 11 of Fig. 18 further has an encryption unit 16 in addition to the components shown in Fig. 2. This encryption unit 16 generates encrypted information by encrypting the information to be received by the mobile wireless device 1. This encrypted information may be generated after the certification process between the mobile wireless device 1 and the communication partner device 11 has been normally completed, by using a key exchanged between the devices.

As stated above, according to the fifth embodiment, information is encrypted and decrypted by using certification keys exchanged between the devices when the certification process has been normally completed. Therefore, information can be transmitted and received only between the devices having normally completed the certification process, which can be utilized to transmit and receive pay content and content requiring copyright protection.

In the examples shown in Fig. 17 and Fig. 18, encrypted information is transmitted from the communication partner device 11 to the mobile wireless device 1, but the encrypted information may be transmitted from the mobile wireless device 1 to the communication partner device 11 instead. In this case, the encryption unit 16 should be provided in the mobile wireless device, and the decryption unit 7 should be provided in the communication partner device 11.

### (Sixth Embodiment)

A sixth embodiment to be explained below relates to another modification example of the internal structure of the mobile wireless device 1 and communication partner device 11 according to the first to fourth embodiments.

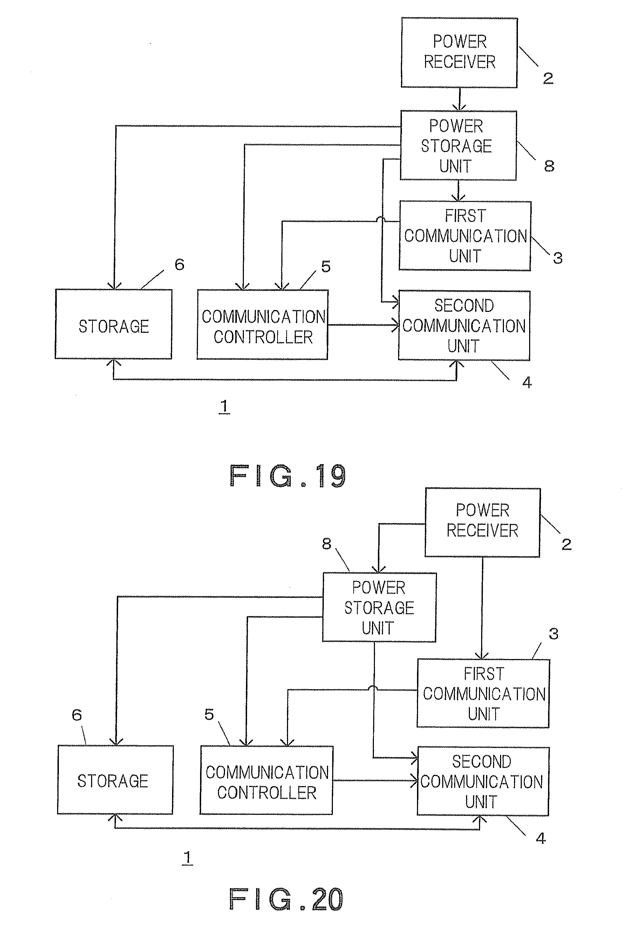

Fig. 19 is a block diagram showing a schematic structure of the mobile wireless device 1 according to the sixth embodiment. The mobile wireless device 1 of Fig. 19 further has a power storage unit 8 in addition to the components shown in Fig. 1.

The data communication between the second communication unit 4 in the mobile wireless device 1 and the fourth communication unit 14 in the communication partner device 11 is required to be performed at high speed, since the amount of information to be transferred in the data communication is larger than that in the certification process performed between the first communication unit 3 in the mobile wireless device 1 and the third communication unit 13 in the communication partner device 11.

However, the increase in communication speed generally leads to the increase in power consumption. The first to fourth embodiments are based on the assumption that the data communication is performed utilizing wirelessly received power, which may make it difficult to perform high-speed data communication due to power shortage.

Accordingly, the power storage unit 8 is provided in the mobile wireless device 1 to accumulate the power wirelessly received by the power receiver 2. The first communication unit 3 and the second communication unit 4 are driven by the power accumulated in the power storage unit 8. More specifically, when the amount of electric energy accumulated in the power storage unit 8 becomes sufficient enough to drive the first communication unit 3 and the second communication unit 4, these communication units are supplied with power from the power storage unit 8 and start to work.

Fig. 20 is a block diagram according to a modification example derived from Fig. 19. In the mobile wireless device 1 of Fig. 20, the second communication unit 4 performing the data communication at high speed is driven by the power accumulated in the power storage unit 8, and the first communication unit 3 performing the certification process at low speed is driven by the power from the power receiver 2.

In Fig. 19, both of the certification process and the data communication cannot be started until the electric energy accumulated in the power storage unit 8 reaches a predetermined reference level. On the other hand, in Fig. 20, the certification process can be started regardless of the electric energy accumulated in the power storage unit 8, which makes it possible to start the certification process at earlier timing.

As stated above, in the sixth embodiment, since the power storage unit 8 is provided in the mobile wireless device 1 to accumulate the power received by the power receiver 2, power required to perform the data communication at high speed can be generated in the mobile wireless device 1.

Each of Fig. 19 and Fig. 20 is obtained by adding the power storage unit 8 to the components shown in Fig. 1, but the power storage unit 8 may be added to the components shown in Fig. 17.

The proximity wireless communication between the first communication unit 3 in the mobile wireless device 1 and the third communication unit 13 in the communication partner device 11 may be contactless communication using electromagnetic induction, such as NFC (Near Field Communication) and Felica (registered trademark), or may be wireless communication using microwaves or millimeter waves, such as TransferJet, WiFi, and UWB.

Further, the proximity wireless communication between the second communication unit 4 in the mobile wireless device 1 and the fourth communication unit 14 in the communication partner device 11 may be contactless communication using electromagnetic induction, or may be wireless communication using microwaves or millimeter waves.

For example, the mobile wireless device 1 may be any one selected from a card-like device with or without a battery, a cellular phone, a smartphone, a tablet terminal, and a mobile PC. The communication partner device 11 may be a reader/writer terminal for example.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A mobile wireless device comprising:
a power receiver configured to wirelessly receive power;
a first communication unit configured to sequentially perform information transmission, waiting operation, information reception, and internal processing for a certification process, by using the received power;
a second communication unit configured to perform wireless communication for data communication during the certification process, by using the received power; and
a communication controller configured to control performing the data communication by the second communication unit within a period after the first communication unit starts information transmission for the certification process until the first communication unit completes information reception for the certification process.

2. The mobile wireless device of claim 1,
wherein the communication controller controls performing the data communication by the second communication unit during a first period after the first communication unit completes transmitting the information for the certification process until the first communication unit starts receiving the information for the certification process.

3. The mobile wireless device of claim 1,
wherein the communication controller controls performing the data communication by the second communication unit during a second period after the first communication unit starts transmitting the information for the certification process until the first communication unit starts receiving the information for the certification process.

4. The mobile wireless device of claim 1,
wherein the communication controller controls performing the data communication by the second communication unit during a third period after the first communication unit completes transmitting the information for the certification process until the first communication unit completes receiving the information for the certification process.

5. The mobile wireless device of claim 1,
wherein the communication controller controls performing the data communication by the second communication unit during a period when the information transmission, waiting operation, and information reception for the certification process are performed.

6. The mobile wireless device of claim 1,
wherein each of the first communication unit and the second communication unit performs proximity wireless communication with a communication partner device placed in proximity thereto.

7. The mobile wireless device of claim 1, further comprising:
a storage configured to store information for the data communication; and
a decryption unit configured to decrypt the information stored in the storage using a key acquired by the first communication unit or the second communication unit, after the certification process is normally completed.

8. The mobile wireless device of claim 1,
wherein communication speed of the second communication unit is faster than that of the first communication unit.

9. The mobile wireless device of claim 8, further comprising:
a power storage unit configured to accumulate the power received by the power receiver,
wherein at least the second communication unit of the first and second communication units is driven by the power supplied from the power storage unit after electric energy accumulated in the power storage unit exceeds a predetermined reference level.

10. A wireless communication method comprising:
wirelessly receiving power;
sequentially performing information transmission, waiting operation, information reception, and internal processing for a certification process, by a first communication unit using the received power;
performing wireless communication for data communication during the certification process, by a second communication unit using the received power; and
controlling performing the data communication by the second communication unit within a period after the first communication unit starts information transmission for the certification process until the first communication unit completes information reception for the certification process.

11. The method of claim 10,
wherein the controlling controls performing the data communication by the second communication unit during a first period after the first communication unit completes transmitting the information for the certification process until the first communication unit starts receiving the information for the certification process.

12. The method of claim 10,
wherein the controlling controls performing the data communication by the second communication unit during a second period after the first communication unit starts transmitting the information for the certification process until the first communication unit starts receiving the information for the certification process.

13. The method of claim 10,
wherein the controlling controls performing the data communication by the second communication unit during a third period after the first communication unit completes transmitting the information for the certification process until the first communication unit completes receiving the information for the certification process.

14. The method of claim 10,
wherein the controlling controls performing the data communication by the second communication unit during a period when the information transmission, waiting operation, and information reception for the certification process are performed.

15. The method of claim 10,
wherein each of the first communication unit and the second communication unit performs proximity wireless communication with a communication partner device placed in proximity thereto.
